# EUROPEAN PATENT APPLICATION

(11) **EP 4 340 259 A1**
(43) Date of publication of application: **20.03.2024**
(21) Application number: 22803924.4
(22) Date of filing: 16.05.2022
(51) Int. Cl.: H04J 14/02

(54) **METHOD AND APPARATUS FOR DETERMINING PORT MATCHING RELATIONSHIP, AND STORAGE MEDIUM**

(30) Priority: 18.05.2021 CN 202110537923
(71) Applicant: ZTE Corporation, Shenzhen, Guangdong 518057 (CN)
(72) Inventor: JIA, Yinqiu, Shenzhen, Guangdong 518057 (CN); WU, Qiong, Shenzhen, Guangdong 518057 (CN); SHI, Hu, Shenzhen, Guangdong 518057 (CN)
(74) Representative: Savi, Massimiliano
(86) International application number: PCT/CN2022/093077
(87) International publication number: WO 2022/242604

(57) **Abstract**

A method and apparatus for determining a port matching relationship, and a storage medium. The method comprises: acquiring a first coding value of a first output port of a transmitting-end wavelength selection switch (S 110): obtaining a first attenuation value of the first output port according to the first coding value, and assigning, to a second input port of a receiving-end wavelength selection switch, an optical wave attenuated on the basis of the first attenuation value (S120): performing power scanning on a second output port of the receiving-end wavelength selection switch. so as to obtain a power value of the second output port, and according to the power value, obtaining a second attenuation value corresponding to the second input port, and obtaining a second coding vale according to the second attenuation value (S130); and determining a matching relationship between the first output port and the second input port according to the first coding value and the second coding value (S140).

## Description

### CROSS-REFERENCE TO RELATED APPLICATION

This application is filed on the basis of Chinese patent application No. 202110537923.0 filed May 18, 2021, and claims priority to the Chinese patent application, the entire contents of which are incorporated herein by reference.

### TECHNICAL FIELD

The present disclosure relates to the technical field of communication, and in particular, to a method and apparatus for determining a port matching relationship, and a storage medium.

### BACKGROUND

Optical Transport Network (OTN) technology is a novel optical transport system, which inherits the advantages of Synchronous Digital Hierarchy (SDH) networks and Wavelength Division Multiplexing (WDM) networks, and has the advantages of high capacity and satisfactory management and control mechanism. The OTN can realize the functions of transmission, exchange, and multiplexing of signals at various granularities. In addition, the OTN can support a variety of upper-layer services and protocols, and is an important networking technology for optical bearer networks. A Wavelength Selective Switch (WSS)-based Reconfigurable Optical Add/Drop Multiplexer (ROADM) networking technology can realize flexible optical switching at any wavelength and in any direction and has become a development trend of WDM networks. Using multi-dimensional WSS, a ROADM can realize the functions of add/drop and pass-through of optical signals in multiple directions. However, with the increase in the number of network directions, the number of fibers that need to be connected in the ROADM increases dramatically.

In some cases, especially at the deployment stage of the OTN, the discovery and reporting of the fiber connection relationship in the ROADM site mainly depends on the connection relationship preset by planning software, and fibers are connected manually according to the preset connection relationship. As a result, the automatic discovery of the fiber matching and connection relationship cannot be realized. When the number of fibers increases dramatically due to the increase in the number of network directions, human errors and a high inspection error rate are caused. Moreover, the inspection for erroneous fiber connections requires manual checking of the fiber connections one by one, which is inefficient.

### SUMMARY

The following is a summary of the subject matter set forth in the description. This summary is not intended to limit the scope of protection of the claims.

Embodiments of the present disclosure provide a method and apparatus for determining a port matching relationship, and a storage medium.

In accordance with a first aspect of the present disclosure, an embodiment provides a method for determining a port matching relationship, including: acquiring a first code value of a first output port of a transmit-end wavelength selective switch; obtaining a first attenuation value of the first output port according to the first code value, and assigning, to a second input port of a receive-end wavelength selective switch, an optical wave attenuated based on the first attenuation value; performing power scanning on a second output port of the receive-end wavelength selective switch to obtain a power value of the second output port, obtaining a second attenuation value corresponding to the second input port according to the power value, and obtaining a second code value according to the second attenuation value; and determining a matching relationship between the first output port and the second input port according to the first code value and the second code value.

In accordance with a second aspect of the present disclosure, an embodiment provides an apparatus for determining a port matching relationship, including a memory and a processor, where the memory is configured for storing a computer program which, when executed by the processor, causes the processor to implement the method for determining a port matching relationship in accordance with the first aspect.

In accordance with a third aspect of the present disclosure, an embodiment provides a computer-readable storage medium, storing a program which, when executed by a processor, causes the processor to implement the method for determining a port matching relationship in accordance with the first aspect.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are intended to illustrate the technical schemes of the present disclosure, and do not constitute a limitation to the technical schemes of the present disclosure.
FIG. 1 is a schematic diagram of a commonly used ROADM networking mode according to an embodiment of the present disclosure;
FIG. 2 is a flowchart of a method for determining a port matching relationship according to an embodiment of the present disclosure;
FIG. 3 is a flowchart of a method for determining a port matching relationship according to another embodiment of the present disclosure;
FIG. 4 is a diagram of interrupting a fiber connection of a first input port of a transmit-end wavelength selective switch according to an embodiment of the present disclosure;
FIG. 5 is a flowchart of a method for determining a port matching relationship according to another embodiment of the present disclosure;
FIG. 6 is a flowchart of a method for determining a port matching relationship according to another embodiment of the present disclosure;
FIG. 7 is a flowchart of a method for determining a port matching relationship according to another embodiment of the present disclosure;
FIG. 8 is a flowchart of a method for determining a port matching relationship according to another embodiment of the present disclosure;
FIG. 9 is a schematic diagram of ROADM networking in four add/drop directions according to an embodiment of the present disclosure;
FIG. 10 is a schematic diagram of ROADM networking in four add/drop directions according to another embodiment of the present disclosure;
FIG. 11 is a flowchart of a method for determining a port matching relationship according to another embodiment of the present disclosure; and
FIG. 12 is a flowchart of an apparatus for determining a port matching relationship according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It should be understood that in the description of the embodiments of the present disclosure, the term "a plurality of" (or multiple) means at least two, the terms such as "greater than", "less than", "exceed" or variants thereof prior to a number or series of numbers are understood to exclude the number, and the terms such as "above", "below", and "within" prior to a number or series of numbers are understood to include the number. If used herein, the terms such as "first", "second" and the like are merely used for distinguishing technical features, and are not intended to indicate or imply relative importance, or implicitly point out the number of the indicated technical features, or implicitly point out the order of the indicated technical features.

The OTN technology is a novel optical transport system, which inherits the advantages of SDH networks and WDM networks, and has the advantages of high capacity and good management and control mechanism. The OTN can realize the functions of transmission, exchange, and multiplexing of signals at various granularities. In addition, the OTN can support a variety of upper-layer services and protocols, and is an important networking technology for optical bearer networks. A WSS-based ROADM networking technology can realize flexible optical switching at any wavelength and in any direction, has become a development trend of WDM networks, and has gradually replaced PDU and OMU based FOADM networking technologies. Using multi-dimensional WSS, a ROADM can realize the functions of add/drop and pass-through of optical signals in multiple directions. Based on the direction of use, wavelength selective switches can be divided into wavelength selective switches in an add direction, i.e., receive-end wavelength selective switches, and wavelength selective switches in a drop direction, i.e., transmit-end wavelength selective switches. For the wavelength selective switch in the drop direction, light enters from an IN port and exits from a plurality of different D ports. For the wavelength selective switch in the add direction, light enters from a plurality of A ports and exits from an OUT port. A power detection point for detecting power of the plurality of A ports is provided at the OUT port of the wavelength selective switch in the add direction. The wavelength selective switch can realize wavelength assignment. For example, light with multiple wavelengths enters a wavelength selective switch in the drop direction from an IN port of the wavelength selective switch, and the wavelength selective switch can assign light with different wavelengths to any port. On the contrary, a wavelength selective switch in the drop direction can output light with a particular wavelength from different ports through its OUT port.

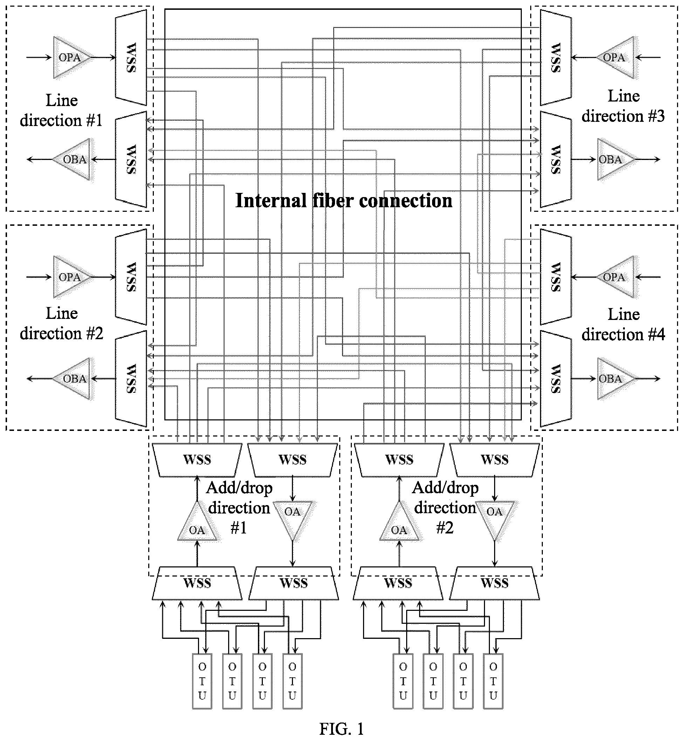

In a ROADM site, an add/drop side and a line side are networked by wavelength selective switches. Light enters an IN port of a wavelength selective switch in the drop direction from an optical amplifier, sequentially passes through D ports of the wavelength selective switch in the drop direction and A ports of a wavelength selective switch in the add direction, and exits from an OUT port of the wavelength selective switch in the add direction. FIG. 1 shows a commonly used ROADM networking mode, where 12 wavelength selective switches are used to realize networking of two add/drop directions and four line directions. The 12 wavelength selective switches are connected to one another in any two directions through 30 fibers. However, with the increase in the number of network directions, the number of fibers that need to be connected in the ROADM increases dramatically. For example, with 42 20-dimensional wavelength selective switches, intercommunication between a maximum of 21 directions (including add/drop directions and line directions) can be realized. Such a configuration requires the use of 420 fibers to connect the wavelength selective switches.

At present, there is no automatic discovery technology for the fiber connection relationship within the ROADM. In existing technologies, the discovery and reporting of the fiber connection relationship in the site are mainly performed in the following manner: presetting a fiber connection relationship using planning software, and manually performing fiber connection according to the preset fiber connection relationship. This manner is prone to errors, and the inspection for erroneous fiber connections requires manual checking of the fiber connections one by one, which is inefficient.

The present disclosure provides a method and apparatus for determining a port matching relationship, and a storage medium, which support automatic scanning of a fiber connection relationship in a site to automatically discover a matching relationship between ports, and feature high detection success rate and high efficiency, providing support for site management.

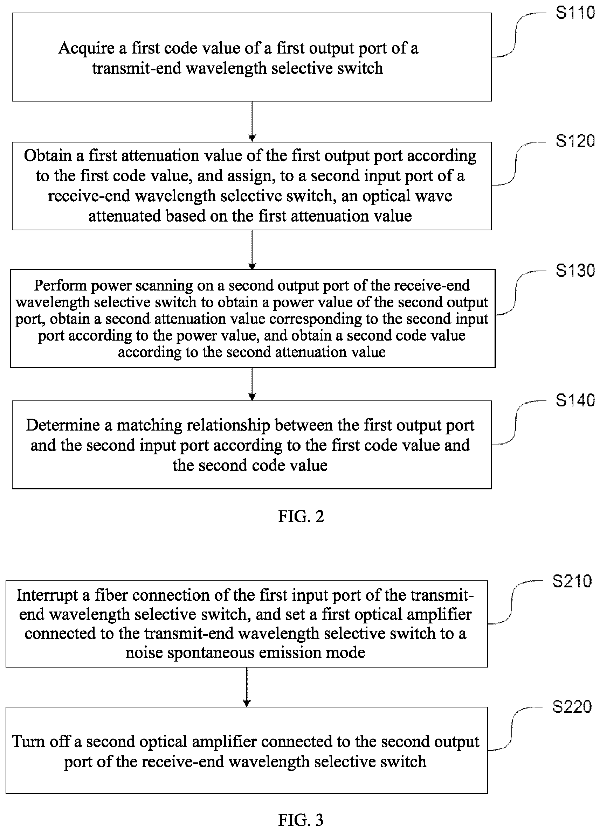

Referring to FIG. 2, an embodiment of the present disclosure provides a method for determining a port matching relationship, which is applied to an apparatus for determining a port matching relationship. The method for determining a port matching relationship includes, but not limited to, the following steps S110 to S140.

At S 110, a first code value of a first output port of a transmit-end wavelength selective switch is acquired.

In some embodiments of the present disclosure, a transmit-end wavelength selective switch includes a first input port and a first output port, and a receive-end wavelength selective switch includes a second input port and a second output port. An apparatus for determining a port matching relationship (hereinafter referred to as an apparatus) first acquires a first code value of the first output port of the transmit-end wavelength selective switch, where the first code value is a code value obtained through encoding of the transmit-end wavelength selective switch. In an embodiment, first, first output ports of a plurality of transmit-end wavelength selective switches in a ROADM site are encoded. Each transmit-end wavelength selective switch may be provided with a plurality of first output ports. The first output ports are D ports of the transmit-end wavelength selective switch. The transmit-end wavelength selective switch is a wavelength selective switch in the drop direction. After the first output ports are encoded, a code value is obtained for each of the first output ports. In an embodiment, the encoding of the first output ports may be performed in advance by a program or may be performed in the process of determining the port matching relationship, which is not particularly limited in the present disclosure.

At S120, a first attenuation value of the first output port is obtained according to the first code value, and an optical wave attenuated based on the first attenuation value is assigned to a second input port of a receive-end wavelength selective switch.

In some embodiments of the present disclosure, light waves emitted from the first output ports are attenuated, and the obtaining of the first attenuation value of the first output port according to the first code value is, for example, as follows. Each of the first output ports corresponds to an attenuation value, and the light wave is additionally attenuated at the first output port. The apparatus assigns the light wave attenuated based on the first attenuation value to the second input port of the receive-end wavelength selective switch, where the second input port is an A port of the receive-end wavelength selective switch. The apparatus assigns a light wave from one output port of a transmit-end wavelength selective switch in one add/drop direction to an A port of a receive-end wavelength selective switch in another add/drop direction in the ROADM site, thereby realizing the assignment of the light wave and setting the corresponding additional attenuation.

At S130, power scanning is performed on a second output port of the receive-end wavelength selective switch to obtain a power value of the second output port, a second attenuation value corresponding to the second input port is obtained according to the power value, and a second code value is obtained according to the second attenuation value.

In some embodiments of the present disclosure, the apparatus performs power scanning on receive-end wavelength selective switches in all add/drop directions in the ROADM site and records a result of the power scanning, to obtain power values of second output ports of the receive-end wavelength selective switches. When the light wave is assigned from the first output port to a second output port of a receive-end wavelength selective switch, a power may be detected at the second output port of the receive-end wavelength selective switch and recorded, where the second output port is an OUT port of the receive-end wavelength selective switch. The apparatus obtains the second attenuation value corresponding to the second input port according to the power value, and obtains the second code value according to the second attenuation value. There is a correspondence between the second attenuation value and the first attenuation value of the first output port of the transmit-end wavelength selective switch. After the second code value is obtained according to the second attenuation value, a matching relationship between the second code value and the first code value can be obtained, thereby facilitating the automatic discovery of a fiber connection relationship.

At S140, a matching relationship between the first output port and the second input port is determined according to the first code value and the second code value.

In some embodiments of the present disclosure, the apparatus determines the matching relationship between the first output port and the second input port according to the first code value and the second code value. After the power value of the second output port obtained by power scanning is subjected to processing to obtain the second attenuation value and then the second code value, the obtained second code value may directly correspond to the first code value. In an embodiment, after obtaining the second code value, the apparatus maps the second code value to a second input port of the receive-end wavelength selective switch. In other words, in the embodiments of the present disclosure, the first code value corresponds to a first output port of a transmit-end wavelength selective switch, the second code value corresponds to a second input port of a receive-end wavelength selective switch, and when the apparatus finds, from the first code values of the transmit-end wavelength selective switch, a first code value identical to or associated with the second code value, it indicates that the first output port corresponding to the first code value is connected to the second input port in the ROADM site, i.e., a matching relationship between the ports in the ROADM site is obtained. It can be understood that if there is no fiber connection between the second input port and the first output port, no power value can be detected at the second input port after the light wave is assigned.

It should be noted that in some embodiments of the present disclosure, the method for determining a port matching relationship is applied at a deployment stage of an OTN. At the deployment stage, the use of the method for determining a port matching relationship in the embodiments of the present disclosure can reduce the impact on service transmission over fibers. At the deployment stage of the OTN, after the fiber connection is completed manually for the first time, a fiber connection relationship of the fibers in the ROADM site is automatically scanned, and a connection matching relationship of the fibers is obtained by using the method for determining a port matching relationship in the embodiments of the present disclosure. In addition, a fiber with an abnormal connection can be found, and operation and maintenance personnel can be informed of the connection relationship of each fiber, thereby providing support for site management.

Referring to FIG. 3, in an embodiment, before S110, the method further includes initialization of the ROADM site, which may include the following steps S210 to S220.

At S210, a fiber connection of the first input port of the transmit-end wavelength selective switch is interrupted, and a first optical amplifier connected to the first input port is set to a noise spontaneous emission mode.

At S220, a second optical amplifier connected to the second output port of the receive-end wavelength selective switch is turned off.

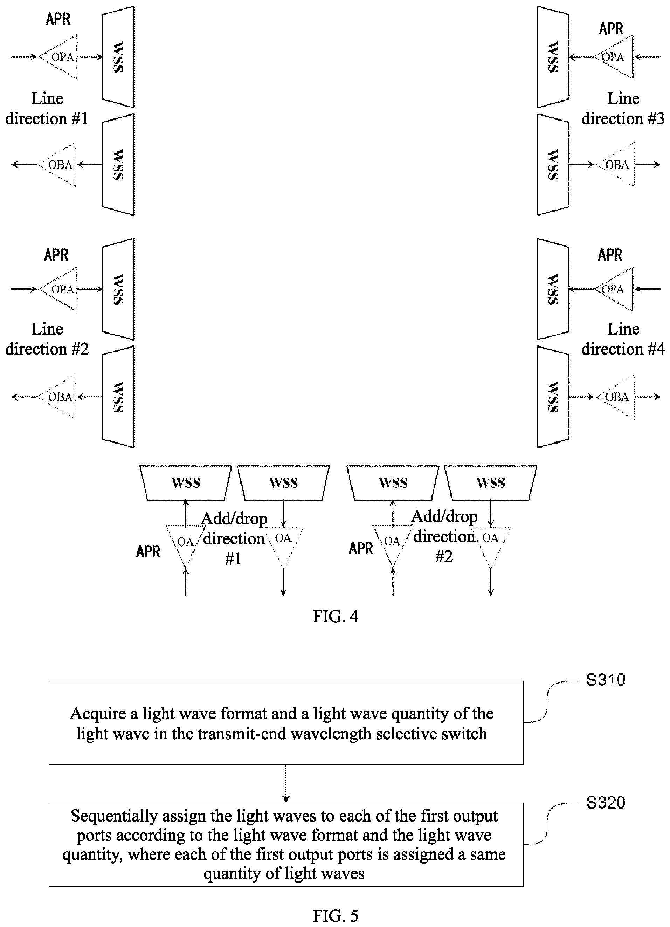

In some embodiments of the present disclosure, the apparatus further initializes the ROADM site before encoding the first output port. As shown in FIG. 4, the initialization includes: interrupting the fiber connection of the first input port of the transmit-end wavelength selective switch, setting the first optical amplifier connected to the first input port to the noise spontaneous emission mode, and turning off the second optical amplifier connected to the second output port of the receive-end wavelength selective switch, where the first input port is an IN port of the transmit-end wavelength selective switch. In an embodiment, the apparatus interrupts the fiber connection of the first input port of the transmit-end wavelength selective switch, sets the first optical amplifier connected to the first input port to the noise spontaneous emission mode in which mode the transmit-end wavelength selective switch generates a wide-spectrum light source, and turns off the second optical amplifier connected to the receive-end wavelength selective switch, so as to prevent entrance of strong light into other modules to cause device damage.

Referring to FIG. 5, in an embodiment, before S110, the method further includes initialization of the ROADM site, which may include the following steps S310 to S320.

At S310, a light wave format and a light wave quantity of the light waves in the transmit-end wavelength selective switch are acquired.

At S320, the light waves are sequentially assigned to each of the first output ports according to the light wave format and the light wave quantity, where each of the first output ports is assigned a same quantity of light waves.

In some embodiments of the present disclosure, the apparatus further initializes the ROADM site before encoding the first output port. The initialization includes wavelength assignment to the transmit-end wavelength selective switch. The wavelength assignment is implemented by acquiring the light wave format and the light wave quantity of light waves in all the transmit-end wavelength selective switches in the ROADM site, and sequentially assigning the light waves to each of the first output ports of the transmit-end wavelength selective switch according to the light wave format and the light wave quantity. First output ports in one transmit-end wavelength selective switch have the same quantity of light waves, such that the first output ports have the same light wave output power. In an embodiment, the light wave format of the light wave is set to C-band, each wave band has a width of 50 GHz, the number of light waves is 80, and four light waves are configured for each first output port, to ensure that the first output ports have the same light wave output power. Other light waves are set to a blocked state. Provided that requirements in the embodiments of the present disclosure are met, the light wave format and the light wave quantity may also be set to other values, which are not particularly limited in the present disclosure.

In some embodiments of the present disclosure, an encoding rule of the first code value is as follows: the apparatus encodes the first output port according to a quantity of the first output ports, a quantity of the transmit-end wavelength selective switches, and a quantity of the receive-end wavelength selective switches to obtain the first code value of the first output port, where different first output ports correspond to different first code values. In this way, each of the first output ports in the ROADM site has a unique first code value. In an embodiment, for networking involving 20-dimensional wavelength selective switches, when the wavelength selective switches are in full configuration, a maximum of 21 directions can be supported, and there are a total of 420 D ports and 420 A ports, supporting a maximum of 420 fiber connections. According to the above numbers, the apparatus may encode the first output ports in octal, with a code length of 4 bits, i.e., from 0000 to 0777, supporting a maximum of 512 connections. 420 D ports of all the transmit-end wavelength selective switches in the drop direction are encoded, starting from 000 to 0643, with a total of 420 different codes. Provided that requirements in the embodiments of the present disclosure are met, other encoding modes may also be used depending on the number of first output ports, the number of transmit-end wavelength selective switches, and the number of receive-end wavelength selective switches, which are not particularly limited in the present disclosure.

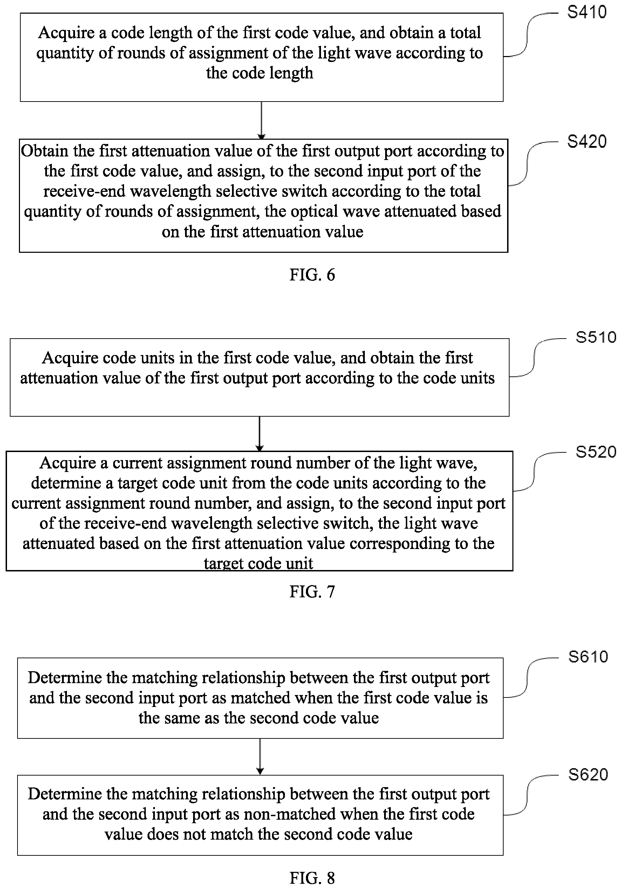

Referring to FIG. 6, in an embodiment, the S120 may include the following steps S410 to S420.

At S410, a code length of the first code value is acquired, and a total quantity of rounds of assignment of the light wave is obtained according to the code length.

At S420, the first attenuation value of the first output port is obtained according to the first code value, and the optical wave attenuated based on the first attenuation value is assigned to the second input port of the receive-end wavelength selective switch according to the total quantity of rounds of assignment.

In some embodiments of the present disclosure, to enable the finally obtained second code value to correspond to the first code value, multiple rounds of light wave assignment and corresponding attenuation are required, including: acquiring the code length of the first code value, and obtaining the total quantity of rounds of assignment of the light wave according to the code length, to ensure that a code number of the second code value is consistent with the code number of the first code value; and obtaining the first attenuation value of the first output port according to the first code value, and assigning, to a second input port of the receive-end wavelength selective switch according to the total quantity of rounds of assignment, the light wave attenuated based on the first attenuation value. In an embodiment, for networking involving 20-dimensional wavelength selective switches, when the wavelength selective switches are in full configuration, a maximum of 21 directions can be supported, and there are a total of 420 D ports and 420 A ports, supporting a maximum of 420 fiber connections. According to the above numbers, the apparatus may encode the first output ports in octal, with a code length of 4 bits. In this case, the total quantity of rounds of assignment is 4, i.e., the light wave is assigned to every second input port of the receive-end wavelength selective switch in each round.

Referring to FIG. 7, in an embodiment, the S420 may include the following steps S510 to S520.

At S510, code units in the first code value are acquired, and the first attenuation value of the first output port is obtained according to the code units.

At S510, a current assignment round number of the light wave is acquired, a target code unit is determined from the code units according to the current assignment round number, and the light wave attenuated based on the first attenuation value corresponding to the target code unit is assigned to the second input port of the receive-end wavelength selective switch.

In some embodiments of the present disclosure, the first attenuation value is obtained according to the code units of the first code value, and different code units correspond to different additional attenuations; the code units in the first code value are acquired, and the first attenuation value of the first output port is obtained according to the code units; then the current assignment round number of the light wave is acquired, the target code unit is determined from the code units according to the current assignment round number, and the light wave attenuated based on the first attenuation value corresponding to the target code unit is assigned to a second input port of the receive-end wavelength selective switch. As shown in table T, Table 1 is a table of correspondence between code units of the first code value obtained by octal coding and additional attenuation of the wavelength selective switch according to an embodiment. The value of the additional attenuation corresponding to each code unit is twice the value of the code unit. Provided that requirements in the embodiments of the present disclosure are met, the value of the additional attenuation corresponding to each code unit may be a greater multiple of the value of the code unit, so as to reduce an error of power scanning in the receive-end wavelength selective switch. In an embodiment, if the current round number is a second round and the first code value of the first output port is 0123, the target code unit of this round is 1, and the corresponding additional attenuation is 2 dB. The transmit-end wavelength selective switch assigns the light wave attenuated based on 2 dB to an A port of the receive-end wavelength selective switch.

**Table 1 Table of correspondence between code units and additional attenuations of wavelength selective switch**

| Code unit | Additional attenuation/dB |
|---|---|
| 0 | 0 |
| 1 | 2 |
| 2 | 4 |
| 3 | 6 |
| 4 | 8 |
| 5 | 10 |
| 6 | 12 |
| 7 | 14 |

In some embodiments of the present disclosure, performing power scanning on the second output port of the receive-end wavelength selective switch to obtain the power value of the second output port in S 130 may be as follows: power scanning is performed on the first input port according to the total quantity of rounds of assignment to obtain a power value of the first input port scanned in each round of assignment; and in the wavelength assignment to the transmit-end wavelength selective switch, the light wave attenuated based on the first attenuation value in the first output port in each round is assigned to a second input port of the receive-end wavelength selective switch in the ROADM site. The apparatus performs a round of power scanning on the receive-end wavelength selective switch in the ROADM site to obtain a power value of this round of assignment. After a light wave of a next round arrives at the receive-end wavelength selective switch, the apparatus performs another round of power scanning on the receive-end wavelength selective switch in the ROADM site to obtain a power value of this round of assignment. As such, the apparatus implements multiple rounds of power scanning.

In some embodiments of the present disclosure, obtaining the second attenuation value corresponding to the second input port according to the power value in S 130 may include: subtracting the obtained power value of the second output port scanned in the first round of assignment from the obtained power value of the second output port scanned in each round of assignment to obtain the second attenuation values corresponding to the second input port. In an embodiment, to enable the second code value to correspond to the first code value, when the code unit is 0, the additional attenuation is set to 0. In other words, no additional attenuation is set for the first round of wavelength assignment. The obtained power value of the second output port scanned in the first round of assignment is subtracted from the obtained power value of the second output port scanned in each round of assignment to obtain a sequence of additional attenuations of multiple rounds, which corresponds to the code units, i.e., corresponds to the first code value of the first output port. In an embodiment, for a second input port of a receive-end wavelength selective switch, when the total quantity of rounds of assignment is 4, output powers (dBm) of the second output port of the receive-end wavelength selective switch of the fourth rounds are -6.99, -8.87, -11.12, and -13.03, respectively. After subtraction processing is performed on the four output powers, 0, 1.88, 4.13, and 6.04 are obtained, i.e., a sequence of additional attenuations of multiple rounds are obtained. Provided that requirements in the embodiments of the present disclosure are met, the ratio between the additional attenuation and the corresponding code unit may have another value, and a sequence of additional attenuations of multiple rounds related to the first code value may also be obtained by subjecting the sequence obtained through subtraction processing to data processing related to the value of the ratio, which is not particularly limited in the present disclosure.

In some embodiments of the present disclosure, obtaining the second code value according to the second attenuation value in S130 may include performing rounding and encoding according to the second attenuation value to obtain the second code value. The second code value obtained through rounding and encoding may be intuitively associated with the first code value. In an embodiment, for a second input port of a receive-end wavelength selective switch, when the total quantity of rounds of assignment is 4, output powers (dBm) of the second output port of the receive-end wavelength selective switch of the fourth rounds are -6.99, -8.87, -11.12, and -13.03, respectively. After subtraction processing is performed on the four output powers, 0, 1.88, 4.13, and 6.04 are obtained, which are rounded to 0, 2, 4, and 6 respectively. The corresponding code is 0123, indicating that there is a fiber connection between this port and the first output port coded 0123 in the transmit-end wavelength selective switch. Provided that requirements in the embodiments of the present disclosure are met, the ratio between the additional attenuation and the corresponding code unit may have another value, and a second code value related to the first code value may also be obtained by subjecting the sequence obtained through subtraction processing to data processing related to the value of the ratio, which is not particularly limited in the present disclosure.

Referring to FIG. 8, in an embodiment, S140 may include at least one of the following steps S610 and S620.

At S610, the matching relationship between the first output port and the second input port is determined as matched when the first code value is the same as the second code value.

At S620, the matching relationship between the first output port and the second input port is determined as non-matched when the first code value does not match the second code value.

In some embodiments of the present disclosure, the apparatus determines a fiber matching and connection relationship according to the obtained second code value. When the first code value is the same as the second code value, the apparatus determines the matching relationship between the first output port and the second input port as matched. For example, when the second code value is 0123, and there is also a first code value which is 0123, the first output port and the second input port are in a connection relationship. When the first code value does not match the second code value, the apparatus determines the matching relationship between the first output port and the second input port as non-matched. For example, when the second code value is 0123, none of the first code values of the first output ports is 0123, and there is a first output port for which no matching second input port can be found, there is a fiber connection error between the two ports.

It should be noted that in some embodiments of the present disclosure, after obtaining a fiber matching and connection relationship between ports in the ROADM site, the apparatus reports a matching result, prompts operation and maintenance personnel to check the fibers. Whereby, a fast and automatic mechanism of discovering the fiber connection relationship at the deployment stage of the OTN is achieved, providing support for network management and control.

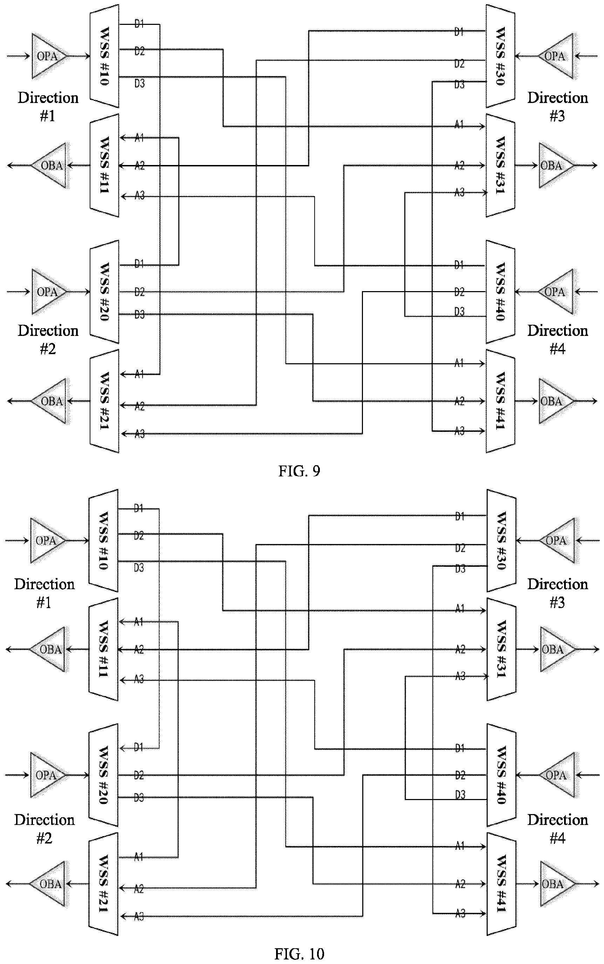

Referring to FIG. 9, it can be understood that in an embodiment of the present disclosure, a ROADM includes four add/drop directions, i.e., four transmit-end wavelength selective switches and four receive-end wavelength selective switches. According to the above numbers, the apparatus may encode the first output ports in octal, with a code length of 3 bits. In this case, the total quantity of rounds of assignment of light waves is 3. Attenuations corresponding to code units are shown in Table 1. It is assumed that among the wavelength selective switches, only ports D1-D3 in the first output ports of the transmit-end wavelength selective switches and ports A1-A3 in the second input ports of the receive-end wavelength selective switches are connected.

Firstly, the ROADM site is initialized. Fibers at IN ports of the transmit-end wavelength selective switches in four directions are disconnected, first optical amplifiers OPA are set to a noise spontaneous emission mode to generate a wide-spectrum light source, and second optical amplifiers OBA connected to the second output ports of the receive-end wavelength selective switches in four directions are set to an off state, so as to prevent entrance of strong light into other modules to cause device damage. The transmit-end wavelength selective switches in the four directions are all configured in a C-band state, each wave has a width of 50 GHz, and the number of light waves is 80. Waves 1, 2, 3, and 4 are assigned to D1 ports. Waves 5, 6, 7, and 8 are assigned to D2 ports. Waves 9, 10, 11, and 12 are assigned to D3 ports. Waves 13 to 80 are set to a blocked state.

In an embodiment, four light waves are configured for each port, such that the receive-end wavelength selective switch can measure the power value of the second output port. Provided that requirements in the embodiments of the present disclosure are met, other numbers of light waves may also be configured, which is not particularly limited in the present disclosure.

Secondly, three rounds of power scanning are performed on only 12 ports. Herein, three rounds of octal coding are performed to obtain first code values. WSS#10, WSS#20, WSS#30, and WSS#40 represent the transmit-end wavelength selective switches in the four add/drop directions. An encoding rule for the first output ports is shown in Table 2.

**Table 2 Encoding rule of first code values of first output ports**

| Port | | Code |
|---|---|---|
| WSS#10 | D1 | 000 |
| | D2 | 001 |
| | D3 | 002 |
| WSS#20 | D1 | 003 |
| | D2 | 004 |
| | D3 | 005 |
| WSS#30 | D1 | 006 |
| | D2 | 007 |
| | D3 | 010 |
| WSS#40 | D1 | 011 |
| | D2 | 012 |
| | D3 | 013 |

The first round of power scanning is performed. First-round code units of the first output ports are all 0, and the additional attenuations are set to 0. All wavelengths are sequentially assigned to the A1, A2, and A3 ports of each receive-end wavelength selective switch, and power detection values at an OUT port of each receive-end wavelength selective switch are recorded.

The second round of power scanning is performed. An additional attenuation corresponding to second-round encoding of each first output port is determined, and a corresponding additional attenuation value is set for the port. For example, an overall code of the D1 port of WSS#40 is 011, and a second-round code unit of the D1 port of WSS#40 is 1. Based on Table 1, an additional attenuation value corresponding to the D1 port of WSS#40 is determined to be 2 dB, and an additional attenuation of 2 dB is set for all the waves 1 to 4 assigned to the D1 port of WSS#40. All wavelengths are sequentially assigned to the A1, A2, and A3 ports of each receive-end wavelength selective switch, and power detection values at the OUT port of each receive-end wavelength selective switch are recorded.

The third round of power scanning is performed. An additional attenuation corresponding to third-round encoding of each first output port is determined, and a corresponding additional attenuation value is set for the port. For example, an overall code of the D2 port of WSS#20 is 004, and a third-round code unit of the D2 port of WSS#20 is 4. Based on Table 1, an additional attenuation value corresponding to the D2 port of WSS#20 is determined to be 8 dB, and an additional attenuation of 8 dB is set for all the waves 5 to 8 assigned to the D2 port of WSS#20. All wavelengths are sequentially assigned to the A1, A2, and A3 ports of each receive-end wavelength selective switch, and power detection values at the OUT port of each receive-end wavelength selective switch are recorded.

The above steps are completed, and the power value at the OUT port when the receive-end wavelength selective switch assigns all wavelengths to each A port is recorded. For example, Table 3 shows a result, where WSS#11, WSS#21, WSS#31, and WSS#41 respectively represent receive-end wavelength selective switches in each add/drop direction.

**Table 3 Table of power recording results according to an embodiment**

| Port | | First-round power/dBm | Second-round power/dBm | Third-round power/dBm |
|---|---|---|---|---|
| WSS#11 | A1 | -23.21 | -23.25 | -29.12 |
| | A2 | -24.56 | -24.42 | -36.58 |
| | A3 | -23.56 | -25.41 | -25.54 |
| WSS#21 | A1 | -24.11 | -24.31 | -24.31 |
| | A2 | -24.51 | -24.36 | -38.41 |
| | A3 | -23.68 | -25.56 | -27.25 |
| WSS#31 | A1 | -24.69 | -24.69 | -26.32 |
| | A2 | -24.25 | -24.31 | -32.28 |
| | A3 | -23.23 | -25.15 | -29.65 |
| WSS#41 | A1 | -23.89 | -23.98 | -27.54 |
| | A2 | -23.98 | -23.98 | -33.58 |
| | A3 | -23.40 | -25.50 | -23.46 |

A decoding process and port pairing are performed. The corresponding first-round power measured at each second output port in Table 3 is sequentially subtracted from the first-round power, the second-round power, and the third-round power to obtain power differences, i.e., second attenuation values, which are rounded to obtain corresponding additional attenuation values. The corresponding second code value is obtained by looking up Table 1 according to the additional attenuation values. The corresponding D port is found based on the second code value. The result is shown in Table 4.

**Table 4 Encoding and matching table of power recording results according to an embodiment**

| Port | | Power difference/dB | Additional attenuation/dB | Second code value | Corresponding port |
|---|---|---|---|---|---|
| WSS#11 | A1 | 0, 0.04, 5.91 | 0, 0, 6 | 003 | #20-D1 |
| | A2 | 0, -0.14, 12.02 | 0, 0, 12 | 006 | #30-D1 |
| | A3 | 0, 1.85, 1.98 | 0, 2, 2 | 011 | #40-D1 |
| WSS#21 | A1 | 0, 0.2, 0.2 | 0, 0, 0 | 000 | #10-D1 |
| | A2 | 0, -0.15, 13.9 | 0, 0, 14 | 007 | #30-D2 |
| | A3 | 0, 1.88, 3.57 | 0, 2, 4 | 012 | #40-D3 |
| WSS#31 | A1 | 0, 0, 1.63 | 0, 0, 2 | 001 | #10-D2 |
| | A2 | 0, 0.06, 8.03 | 0, 0, 8 | 004 | #20-D2 |
| | A3 | 0, 1.92, 6.42 | 0, 2, 6 | 013 | #40-D3 |
| WSS#41 | A1 | 0, 0.09, 3.65 | 0, 0, 4 | 002 | #10-D3 |
| | A2 | 0, 0, 9.6 | 0, 0, 10 | 005 | #20-D3 |
| | A3 | 0, 2.1, 0.06 | 0, 2, 0 | 010 | #30-D3 |

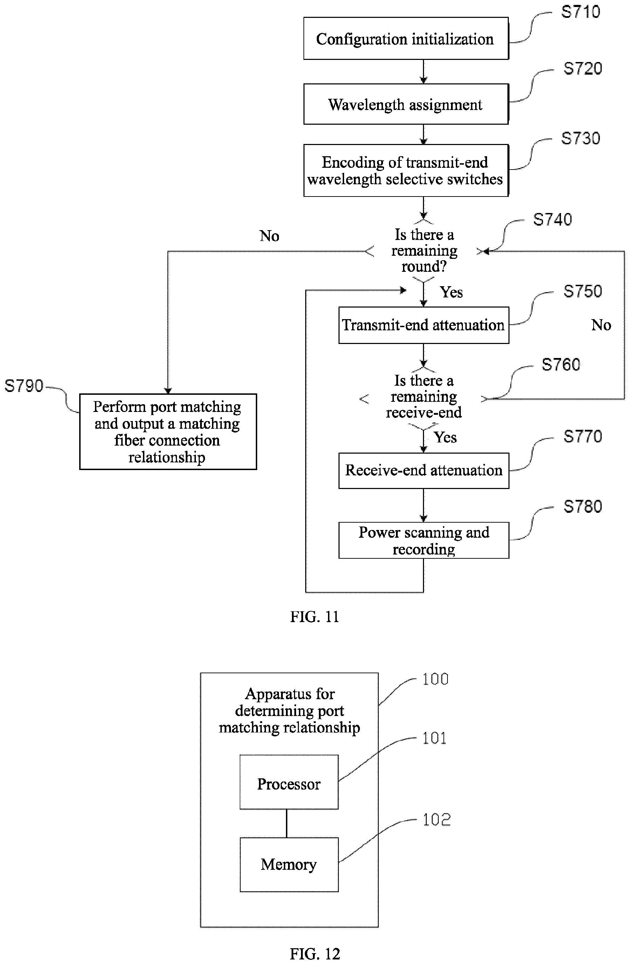

It should be noted that, referring to FIG. 11, in an embodiment, the above process may be summarized as the following method steps S710 to S7100.

At S710, configuration initialization is performed.

At S720, wavelength assignment is performed.

At S730, encoding of transmit-end wavelength selective switches is performed.

At S740, it is determined whether there is a remaining round.

At S750, transmit-end attenuation is performed.

At S760, it is determined whether there is a remaining receive-end port.

At S770, receive-end attenuation is performed.

At S780, power scanning is performed and power values are recorded.

At S790, port matching is performed and a fiber matching and connection relationship is output.

The apparatus determines whether all the rounds of scanning have been completed. If yes, the apparatus performs the decoding process and port matching. Otherwise, the apparatus performs a next round of scanning. As such, multiple rounds of power scanning are implemented. To be specific, each first output port of each transmit-end wavelength selective switch is encoded according to a preset encoding rule to obtain a first code value, and a corresponding additional attenuation value is set for the port in this round. For example, if the current scanning is the second round of scanning and the port has a code of 0123, the code unit in this round is 1 and the corresponding additional attenuation value is 2 dB. Then the apparatus determines whether all the second input ports of the receive-end wavelength selective switches have been detected in this round. If there is a second input port that has not been detected, a next second input port is selected, and all wavelengths are assigned to this second input port. For example, the process proceeds to the detection of a 2nd port in this round, and all the wavelengths are assigned to the A2 port. If all the second input ports have been detected, output powers (OUT ports) of all the receive-end wavelength selective switches are checked and power values are recorded.

Finally, based on matching information between the first column "Port" and the last column "Corresponding port", a fiber matching and connection relationship between the wavelength selective switches is output.

Referring to FIG. 9, it can be understood that in another embodiment of the present disclosure, a ROADM includes four add/drop directions, i.e., four transmit-end wavelength selective switches and four receive-end wavelength selective switches. According to the above numbers, the apparatus may encode the first output ports in octal, with a code length of 3 bits. In this case, the total quantity of rounds of assignment of light waves is 3. Attenuations corresponding to code units are shown in Table 1. It is assumed that among the wavelength selective switches, only ports D1-D3 in the first output ports of the transmit-end wavelength selective switches and ports A1-A3 in the second input ports of the receive-end wavelength selective switches are connected. It is assumed that a fiber from D1 of WSS#10 to A1 of WSS#21 is not well connected, with an insertion loss greater than a normal value.

Firstly, the ROADM site is initialized. Fibers at IN ports of the transmit-end wavelength selective switches in four directions are disconnected, first optical amplifiers OPA are set to a noise spontaneous emission mode to generate a wide-spectrum light source, and second optical amplifiers OBA connected to the second output ports of the receive-end wavelength selective switches in four directions are set to an off state, so as to prevent entrance of strong light into other modules to cause device damage. The transmit-end wavelength selective switches in the four directions are all configured in a C-band state, each wave has a width of 50 GHz, and the number of light waves is 80. Waves 1, 2, 3, and 4 are assigned to D1 ports. Waves 5, 6, 7, and 8 are assigned to D2 ports. Waves 9, 10, 11, and 12 are assigned to D3 ports. Waves 13 to 80 are set to a blocked state.

Secondly, three rounds of power scanning are performed. The first code values obtained by encoding and the process of power scanning are the same as those described in the above embodiment, so the details will not be repeated herein. A table of power recording results according to another embodiment is obtained, as shown in Table 5.

**Table 5 Table of power recording results according to another embodiment**

| Port | | First-round power/dBm | Second-round power/dBm | Third-round power/dBm |
|---|---|---|---|---|
| WSS#11 | A1 | -23.21 | -23.25 | -29.12 |
| | A2 | -24.56 | -24.42 | -36.58 |
| | A3 | -23.56 | -25.41 | -25.54 |
| WSS#21 | A1 | -34.11 | -34.31 | -34.31 |
| | A2 | -24.51 | -24.36 | -38.41 |
| | A3 | -23.68 | -25.56 | -27.25 |
| WSS#31 | A1 | -24.69 | -24.69 | -26.32 |
| | A2 | -24.25 | -24.31 | -32.28 |
| | A3 | -23.23 | -25.15 | -29.65 |
| WSS#41 | A1 | -23.89 | -23.98 | -27.54 |
| | A2 | -23.98 | -23.98 | -33.58 |
| | A3 | -23.40 | -25.50 | -23.46 |

A decoding process and port pairing are performed. The corresponding first-round power measured at each second output port in Table 5 is sequentially subtracted from the first-round power, the second-round power, and the third-round power to obtain power differences, i.e., second attenuation values, which are rounded to obtain corresponding additional attenuation values. The corresponding second code value is obtained by looking up Table 1 according to the additional attenuation values. The corresponding D port is found based on the second code value. The result is the same as that in Table 4 of the above embodiment, and the same fiber connection relationship is output. However, it is found that the first-round power value of A1 of WSS#21 exceeds a normal range, i.e., is less than a detection threshold for the wavelength selective switch, and the apparatus sends out a prompt that a fiber from D1 of WSS#10 to A1 of WSS#21 is not well connected and needs to be adjusted. The range is determined by a lower power limit of the specific wavelength selective switch and is not particularly limited in the present disclosure.

Referring to FIG. 10, it can be understood that in another embodiment of the present disclosure, a ROADM includes four add/drop directions, i.e., four transmit-end wavelength selective switches and four receive-end wavelength selective switches. According to the above numbers, the apparatus may encode the first output ports in octal, with a code length of 3 bits. In this case, the total quantity of rounds of assignment of light waves is 3. Attenuations corresponding to code units are shown in Table 1. It is assumed that among the wavelength selective switches, only ports D1-D3 in the first output ports of the transmit-end wavelength selective switches and ports A1-A3 in the second input ports of the receive-end wavelength selective switches are connected. All fibers are well connected, none of the fibers is faulty, and two fibers are erroneously connected in the site. D1 of WSS#10 is erroneously connected to D1 of WSS#20, and A1 of WSS#11 is erroneously connected to A1 of WSS#21.

Firstly, the ROADM site is initialized. Fibers at IN ports of the transmit-end wavelength selective switches in four directions are disconnected, first optical amplifiers OPA are set to a noise spontaneous emission mode to generate a wide-spectrum light source, and second optical amplifiers OBA connected to the second output ports of the receive-end wavelength selective switches in four directions are set to an off state, so as to prevent entrance of strong light into other modules to cause device damage. The transmit-end wavelength selective switches in the four directions are all configured in a C-band state, each wave has a width of 50 GHz, and the number of light waves is 80. Waves 1, 2, 3, and 4 are assigned to D1 ports. Waves 5, 6, 7, and 8 are assigned to D2 ports. Waves 9, 10, 11, and 12 are assigned to D3 ports. Waves 13 to 80 are set to a blocked state.

Secondly, three rounds of power scanning are performed. The first code values obtained by encoding and the process of power scanning are the same as those described in the above embodiment, so the details will not be repeated herein. A table of power recording results according to another embodiment is obtained, as shown in Table 6.

**Table 6 Table of power recording results according to another embodiment**

| Port | | First-round power/dBm | Second-round power/dBm | Third-round power/dBm |
|---|---|---|---|---|
| WSS#11 | A1 | No light | No light | No light |
| | A2 | -24.56 | -24.42 | -36.58 |
| | A3 | -23.56 | -25.41 | -25.54 |
| WSS#21 | A1 | No light | No light | No light |
| | A2 | -24.51 | -24.36 | -38.41 |
| | A3 | -23.68 | -25.56 | -27.25 |
| WSS#31 | A1 | -24.69 | -24.69 | -26.32 |
| | A2 | -24.25 | -24.31 | -32.28 |
| | A3 | -23.23 | -25.15 | -29.65 |
| WSS#41 | A1 | -23.89 | -23.98 | -27.54 |
| | A2 | -23.98 | -23.98 | -33.58 |
| | A3 | -23.40 | -25.50 | -23.46 |

A decoding process and port pairing are performed. The corresponding first-round power measured at each second output port in Table 6 is sequentially subtracted from the first-round power, the second-round power, and the third-round power to obtain power differences, i.e., second attenuation values, which are rounded to obtain corresponding additional attenuation values. The corresponding second code value is obtained by looking up Table 1 according to the additional attenuation values. The corresponding D port is found based on the second code value. The result is the same as that in Table 4 of the above embodiment, except that no result is obtained for A1 of WSS#11, A1 of WSS#21, D1 of WSS#10, and D1 of WSS#20. The discovered fiber connection relationship is output. In addition, a prompt is sent to remind operation and maintenance personnel that fiber connections of A1 of WSS#11, A1 of WSS#21, D1 of WSS#10, and D1 of WSS#20 are erroneous and need to be adjusted.

FIG. 12 shows an apparatus for determining a port matching relationship according to an embodiment of the present disclosure. The apparatus 100 includes a memory 102, a processor 101, and a computer program stored in the memory 102 and executable by the processor 101. The computer program, when executed by the processor, causes the processor to implement the method for determining a port matching relationship.

The processor 101 and the memory 102 may be connected by a bus or in other ways.

The memory 102, as a non-transitory computer-readable storage medium, may be configured for storing a non-transitory software program and a non-transitory computer-executable program, for example, the method for determining a port matching relationship according to the embodiments of the present disclosure. The processor 101 runs the non-transitory software program and the non-transitory computer-executable program stored in the memory 102, to implement the method for determining a port matching relationship.

The memory 102 may include a program storage area and a data storage area. The program storage area may store an operating system, and an application required by at least one function. The data storage area may store data and the like required for executing the method for determining a port matching relationship. In addition, the memory 102 may include a high speed random access memory 102, and may also include a non-transitory memory 102, e.g., at least one magnetic disk storage device, flash memory device, or other non-transitory solid-state storage device. In some implementations, the memory 102 may include memories 102 located remotely from the processor 101, and the remote memories 102 may be connected to the apparatus 100 via a network. Examples of the network include, but are not limited to, the Internet, an intranet, a local area network, a mobile communication network, and combinations thereof.

The non-transitory software program and instructions required to implement the method for determining a port matching relationship are stored in the memory 102 which, when executed by one or more processors 101, cause the one or more processors 101 to implement the method for determining a port matching relationship, for example, implement the method steps 110 to 140 in FIG. 2, the method steps 210 to 220 in FIG. 3, the method steps 310 to 320 in FIG. 5, the method steps 410 to 420 in FIG. 6, the method steps 510 to 520 in FIG. 7, the method steps 610 to 620 in FIG. 8, or the method steps 710 to 790 in FIG. 11.

An embodiment of the present disclosure provides a computer-readable storage medium, storing a computer-executable instruction which, when executed by a processor, causes the processor to implement the method for determining a port matching relationship.

In an embodiment, the computer-readable storage medium stores a computer-executable instruction which, when executed by one or more control processors, causes the one or more control processors to implement, for example the method steps 110 to 140 in FIG. 2, the method steps 210 to 220 in FIG. 3, the method steps 310 to 320 in FIG. 5, the method steps 410 to 420 in FIG. 6, the method steps 510 to 520 in FIG. 7, the method steps 610 to 620 in FIG. 8, or the method steps 710 to 790 in FIG. 11.

The embodiments of the present disclosure at least include the following beneficial effects. In the embodiments of the present disclosure, a first output port of a transmit-end wavelength selective switch in a ROADM site is encoded to obtain a first code value of the first output port. A first attenuation value of the first output port may be obtained according to the first code value. A light wave attenuated based on the first attenuation value in the first output port is assigned to a receive-end wavelength selective switch in the ROADM site. Power scanning is performed on the receive-end wavelength selective switch to obtain a power value of a second output port of the receive-end wavelength selective switch. A second attenuation value corresponding to the second input port is obtained according to the power value. A second code value is obtained according to the second attenuation value. Finally, the first code value is compared with the second code value to determine a matching relationship between the first output port and the second input port. In the embodiments of the present disclosure, power coding of different ports is realized through the attenuation configuration of the transmit-end wavelength selective switch, and the matching of the first output port and the second input port is realized through the power detection of the receive-end wavelength selective switch, such that a matching relationship between ports can be automatically discovered. This scheme features a high detection success rate and high efficiency.

The apparatus embodiments described above are merely examples. The units described as separate components may or may not be physically separated, i.e., may be located in one place or may be distributed over a plurality of network units. Some or all of the modules may be selected according to actual needs to achieve the objects of the scheme of this embodiment.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but is not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

It should also be understood that the various implementations provided by the embodiments of the present disclosure may be arbitrarily combined to achieve different technical effects.

Although some embodiments of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. A method for determining a port matching relationship, comprising:
acquiring a first code value of a first output port of a transmit-end wavelength selective switch;
obtaining a first attenuation value of the first output port according to the first code value, and assigning, to a second input port of a receive-end wavelength selective switch, an optical wave attenuated based on the first attenuation value;
performing power scanning on a second output port of the receive-end wavelength selective switch to obtain a power value of the second output port, obtaining a second attenuation value corresponding to the second input port according to the power value, and obtaining a second code value according to the second attenuation value; and
determining a matching relationship between the first output port and the second input port according to the first code value and the second code value.

2. The method for determining a port matching relationship of claim 1, wherein prior to acquiring a first code value of a first output port of a transmit-end wavelength selective switch, the method further comprises:
interrupting a fiber connection of the first input port of the transmit-end wavelength selective switch, and setting a first optical amplifier connected to the transmit-end wavelength selective switch to a noise spontaneous emission mode to cause the first optical amplifier to generate a wide-spectrum light source; and
turning off a second optical amplifier connected to the second output port of the receive-end wavelength selective switch.

3. The method for determining a port matching relationship of claim 1, wherein prior to acquiring a first code value of a first output port of a transmit-end wavelength selective switch, the method further comprises:
acquiring a light wave format and a light wave quantity of light waves in the transmit-end wavelength selective switch; and
sequentially assigning the light waves to each of first output ports according to the light wave format and the light wave quantity, wherein each of the first output ports is assigned a same quantity of light waves.

4. The method for determining a port matching relationship of claim 1, wherein the first code value is obtained according to the following steps:
encoding the first output port according to a quantity of the first output ports, a quantity of the transmit-end wavelength selective switches, and a quantity of the receive-end wavelength selective switches to obtain the first code value of the first output port,
wherein different first output ports correspond to different first code values.

5. The method for determining a port matching relationship of claim 1, wherein obtaining a first attenuation value of the first output port according to the first code value, and assigning, to a second input port of a receive-end wavelength selective switch, an optical wave attenuated based on the first attenuation value comprises:
acquiring a code length of the first code value, and obtaining a total quantity of rounds of assignment of the light wave according to the code length; and
obtaining the first attenuation value of the first output port according to the first code value, and assigning, to the second input port of the receive-end wavelength selective switch according to the total quantity of rounds of assignment, the optical wave attenuated based on the first attenuation value.

6. The method for determining a port matching relationship of claim 5, wherein obtaining the first attenuation value of the first output port according to the first code value, and assigning, to the second input port of the receive-end wavelength selective switch according to the total quantity of rounds of assignment, the optical wave attenuated based on the first attenuation value comprises:
acquiring code units in the first code value, and obtaining the first attenuation value of the first output port according to the code units; and
acquiring a current assignment round number of the light wave, determining a target code unit from the code units according to the current assignment round number, and assigning, to the second input port of the receive-end wavelength selective switch, the light wave attenuated based on the first attenuation value corresponding to the target code unit.

7. The method for determining a port matching relationship of claim 5, wherein performing power scanning on a second output port of the receive-end wavelength selective switch to obtain a power value of the second output port comprises:
performing power scanning on the second output port according to the total quantity of rounds of assignment to obtain the power value of the second output port scanned in each round of assignment.

8. The method for determining a port matching relationship of claim 7, wherein obtaining a second attenuation value corresponding to the second input port according to the power value comprises:
the obtained power value of the second output port scanned in the first round of assignment is subtracted from the obtained power value of the second output port scanned in each round of assignment to obtain the second attenuation values corresponding to the second input port.

9. The method for determining a port matching relationship of claim 1 or 8, wherein obtaining a second code value according to the second attenuation value comprises:
performing rounding and encoding according to the second attenuation value to obtain the second code value.

10. The method for determining a port matching relationship of claim 1, wherein determining a matching relationship between the first output port and the second input port according to the first code value and the second code value comprises at least one of:
determining the matching relationship between the first output port and the second input port as matched in response to the first code value being the same as the second code value; or
determining the matching relationship between the first output port and the second input port as non-matched in response to the first code value not matching the second code value.

11. An apparatus for determining a port matching relationship, comprising a memory and a processor, wherein the memory is configured for storing a computer program which, when executed by the processor, causes the processor to perform the method for determining a port matching relationship of any one of claims 1 to 10.

12. A computer-readable storage medium, storing a computer program which, when executed by a processor, causes the processor to perform the method for determining a port matching relationship of any one of claims 1 to 10.
